(19) **Europäisches Patentamt / European Patent Office / Office européen des brevets**

(11) **EP 4 087 267 A1**

(12) # EUROPEAN PATENT APPLICATION
published in accordance with Art. 153(4) EPC

(43) Date of publication:
**09.11.2022 Bulletin 2022/45**

(21) Application number: **20910812.5**

(22) Date of filing: **20.11.2020**

(51) International Patent Classification (IPC):
***H04N 21/485*** *(2011.01)*

(52) Cooperative Patent Classification (CPC):
**H04N 21/422; H04N 21/431; H04N 21/435;
H04N 21/485; H04N 21/488**

(86) International application number:
**PCT/CN2020/130446**

(87) International publication number:
**WO 2021/135712 (08.07.2021 Gazette 2021/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.12.2019 CN 201911399489**

(71) Applicant: **ZTE Corporation
Shenzhen, Guangdong 518057 (CN)**

(72) Inventors:
• **ZHUANG, Yan
Shenzhen, Guangdong 518057 (CN)**
• **YI, Ying
Shenzhen, Guangdong 518057 (CN)**
• **ZHAO, Qiulin
Shenzhen, Guangdong 518057 (CN)**

(74) Representative: **Ipsilon
Le Centralis
63, avenue du Général Leclerc
92340 Bourg-la-Reine (FR)**

(54) **CAPTION ADJUSTMENT METHOD AND APPARATUS, TERMINAL AND STORAGE MEDIUM**

(57) The present disclosure provides a caption adjustment method, a caption adjustment device, a terminal and a storage medium. The method includes: sending a ranging signal to a remote control device, and receiving the ranging signal returned by the remote control device; determining a distance between a terminal and the remote control device according to a time difference between sending of the ranging signal and reception of the ranging signal; and adjusting a display size of a caption resource currently played by the terminal according to the distance between the terminal and the remote control device.

FIG. 1

**Description**

CROSS-REFERENCE TO RELATED APPLICATIONS

The present disclosure claims the priority to Chinese Patent Application No. CN201911399489.3 entitled "CAPTION ADJUSTMENT METHOD AND DEVICE, TERMINAL, AND STORAGE MEDIUM" and filed on December 30, 2019, the entire contents of which are incorporated herein by reference.

TECHNICAL FIELD

The present disclosure relates to the field of smart homes, and in particular, to a caption adjustment method, a caption adjustment device, a terminal and a storage medium.

BACKGROUND

A caption is an indispensable element in film and television works, and can help viewers understand contents of the film and television works, and greatly improve viewing experience. At present, smart terminals on the market do not support adjustment of a caption size or merely support manual adjustment of the caption size by users, and do not realize a function of self-adaptation of the caption size in video images. Under the condition that the caption size is fixed, a position of a viewer becomes one of important influence factors for the viewer to see the caption clearly, understand the contents of the film and television words, and have good viewing experience. In view of the above, a method has been proposed nowadays that a camera is mounted on a display terminal, and is configured to extract user information based on image recognition technology, so as to achieve a purpose of self-adjustment of the caption size. However, for video playing at home, user privacy is involved when image information of a user is extracted by the camera, so that the method is hard to be implemented in real life; in addition, a terminal is high in cost due to a need to support an extra cinema.

SUMMARY

At least one of embodiments of the present disclosure provides a caption adjustment method, a caption adjustment device, a terminal and a storage medium, which determine a distance between a terminal and a remote control device by the terminal sending a ranging signal to the remote control device, and adjusting a caption size according to the distance between the terminal and the remote control device.

An embodiment of the present disclosure provides a caption adjustment method, including: sending, by a terminal, a ranging signal to a remote control device, and receiving the ranging signal returned by the remote control device; determining, by the terminal, a distance between the terminal and the remote control device according to a time difference between sending of the ranging signal and reception of the ranging signal; and adjusting, by the terminal, a display size of a caption resource currently played by the terminal according to the distance between the terminal and the remote control device.

Another embodiment of the present disclosure provides a caption adjustment device applied to a terminal, including: a ranging signal transceiving module configured to send a ranging signal to a remote control device, and receive the ranging signal returned by the remote control device; a distance determining module configured to determine a distance between the terminal and the remote control device according to a time difference between sending of the ranging signal and reception of the ranging signal; and a caption adjusting module configured to adjust a display size of a currently played caption resource according to the distance between the terminal and the remote control device.

Yet another embodiment of the present disclosure provides a terminal, including a memory having a computer program stored therein, and a processor configured to run the computer program to perform operations of the method described above.

Still another embodiment of the present disclosure provides a computer-readable storage medium having a computer program stored thereon which, when executed by a processor, cause the processor to perform the operations of the method described above.

Other features and advantages of the present disclosure will be described in the following description, and can become partially apparent from the description or be understood through the implementation of the present disclosure. The objective and the other advantages of the present disclosure can be achieved and obtained through the structures particularly pointed out in the description, claims and drawings.

BRIEF DESCRIPTION OF DRAWINGS

The accompanying drawings are intended to provide a further understanding of the technical solutions of the present disclosure and constitute a part of the specification. Together with the embodiments of the present disclosure, the drawings are used to explain the technical solutions of the present disclosure, but do not constitute any limitation to the technical solutions.

FIG. 1 is a flowchart illustrating a caption adjustment method according to the present disclosure;
FIG. 2 is a block diagram of a caption adjustment device according to the present disclosure; and
FIG. 3 is a schematic structural diagram of a terminal according to the present disclosure.

DETAIL DESCRIPTION OF EMBODIMENTS

In order to make the objectives, technical solutions and advantages of the present disclosure clearer, the embodiments of the present disclosure are further described in detail below in conjunction with the drawings. It should be noted that the embodiments described herein and the features therein can be arbitrarily combined with one another if no conflict is incurred.

The operations illustrated in the flowchart of the drawings may be performed in a computer system such as a set of computer-executable instructions. In addition, although a logical order is illustrated in the flowchart, the operations illustrated or described may be performed in an order different from that described herein in some cases.

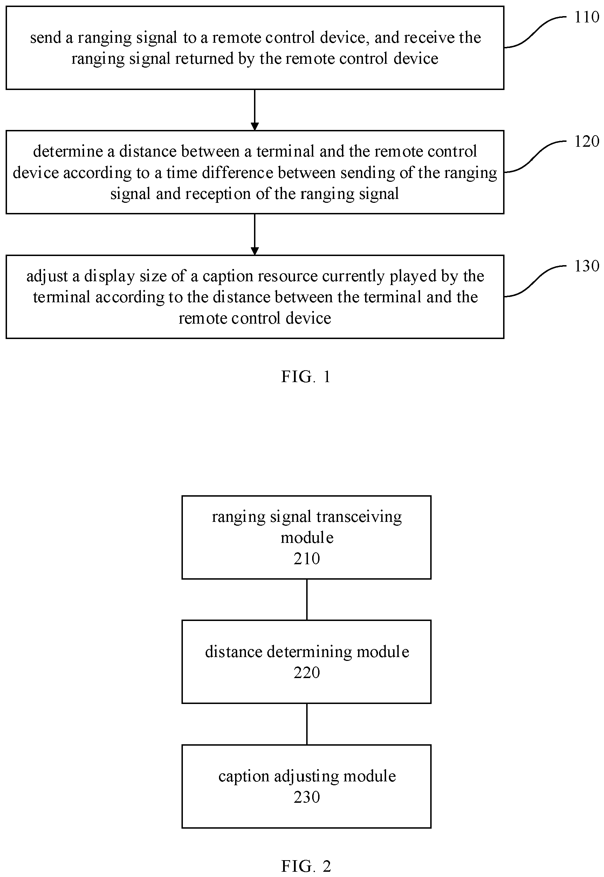

FIG. 1 is a flowchart illustrating a caption adjustment method according to the present disclosure. The method may be performed by a terminal, which may be a set top box, an Internet Protocol Television (IPTV), or any other device capable of playing a video resource. As shown in FIG. 1, the method includes operations S110 to S130.

At operation S110, sending, by a terminal, a ranging signal to a remote control device, and receiving the ranging signal returned by the remote control device.

At operation S120, determining, by the terminal, a distance between the terminal and the remote control device according to a time difference between sending of the ranging signal and reception of the ranging signal.

At operation S130, adjusting, by the terminal, a display size of a caption resource currently played by the terminal according to the distance between the terminal and the remote control device.

In some implementations, the remote control device may be a device capable of being connected to a wired network or a wireless network, such as a remote controller or a mobile terminal, and the remote control device may be connected to the terminal through WIFI, Bluetooth, infrared rays, and the like.

In the present disclosure, the terminal receives a signal sent by the remote control device before the ranging signal is sent to the remote control device, and the signal is configured to instruct the terminal to send the ranging signal to the remote control device. Firstly, after a user turns on the terminal, a prompt dialog box may automatically pop up on a display screen of the terminal to prompt the user whether to enter an automatic caption adjustment mode.

In some implementations, the prompt dialog box provides a confirm button and a cancel button for the user to select, and a location for displaying the prompt dialog on the display screen may be set in advance. A focus is kept on the cancel button every time the prompt dialog box pops up, and a first preset time period is automatically counted. If the user does not operate the remote control device to click on the confirm button within the first preset time period, the prompt dialog box disappears automatically, that is, the automatic adjustment mode is not started by default. The user may set the prompt dialog box to pop up again on a setting interface, and the first preset time period may be adjusted.

When the user operates the remote control device to click on the confirm button to enter the automatic caption adjustment mode, a Toast box pops up on a television screen to prompt the user to long press a caption calibration key for a second preset time period so as to complete initial calibration of the automatic caption adjustment mode, and the second preset time period for long pressing the caption calibration key may be adjusted. After the user long presses the caption calibration key for the second preset time period, the terminal may continuously receive signals from the caption calibration key.

When the user does not operate according to the prompt, the Toast box pops up again every a third preset time period to prompt the user. If the user still does not operate according to the prompt after the number of times of popping of the Toast box exceeds a preset threshold, the user is prompted to quit the automatic caption adjustment mode and return to a normal viewing mode, and the third preset time period and the preset threshold may be adjusted.

In a case where the automatic caption adjustment mode is entered, when the user enters the setting interface to set the prompt dialog box to pop up again, the prompt dialog box may prompt the user whether to return to the normal viewing mode. When the user selects the confirm button, a caption on the television interface is restored to a normal state; and if the user does not respond within a fourth preset time period, the prompt dialog box disappears automatically and a video is continuously played in the automatic caption adjustment mode.

In the automatic caption adjustment mode, the user may also actively long press the caption calibration key for the second preset time period to adjust a size of a caption currently displayed on the television screen.

In the present disclosuer, the terminal sends the ranging signal and waits for the ranging signal to be returned by the remote control device. The distance between the terminal and the remote control device, that is, a distance between the user and the television screen, may be determined according to a product of the time difference between the sending of the ranging signal and the reception of the ranging signal and a wave propagation speed of the signal.

The distance between the terminal and the remote control device may be determined with a method of averaging results of multiple calculations. In some implementations, time differences between the sending of the ranging signal and the reception of the ranging signal are calculated for N times; an average of products of the time differences and a propagation speed of the ranging signal is taken; and a half of the average is taken as the distance between the terminal and the remote control device.

In the present disclosure, in a case where the distance between the terminal and the remote control device is less than a minimum threshold, the display size of the caption resource takes a preset minimum limit value; and in a case where the distance between the terminal and the remote control device is greater than a maximum threshold, the display size of the caption resource takes a preset maximum limit value.

There are two limit values, namely the maximum value $y_{max}$ and the minimum value $y_{min}$, for the display size of the caption resource, and the maximum value or the minimum value should be taken on a basis that the viewing experience of the user is not affected. The automatic caption adjustment mode can improve the viewing experience of the user with the display size of the caption resource changing within a reasonable range. There are also two thresholds, namely the maximum threshold $x_{max}$ and the minimum threshold $x_{min}$, for the distance between the terminal and the remote control device, and the display size of the caption resource takes the preset minimum limit value $y_{min}$ in a case where the terminal detects that the distance between the remote control device and the terminal is less than the minimum threshold $x_{min}$ ; and the display size of the caption resource takes the preset maximum limit value $y_{max}$ in a case where the terminal detects that the distance between the remote control device and the terminal is greater than the maximum threshold $x_{max}$.

In the present disclosure, a caption size may be adjusted in real time through a certain algorithm according to the distance between the terminal and the remote control device, and the caption with the adjusted size is displayed on the screen. There is a preset value for the distance between the terminal and the remote control device, and the preset value is calculated according to a size and resolution of the television screen and represents an optimal viewing distance.

In some implementations, a signal for adjusting a font size of the caption may be acquired with the following method according to the distance between the terminal and the remote control device.

A viewing distance, that is, the distance between the terminal and the remote control device, is set as x, and the caption size of the video is set as y. In order to guarantee the viewing experience of the user, the caption size of the video should be increased correspondingly as the viewing distance increases, so that the viewing distance is directly proportional to the caption size of the video, and it is set as follows:

$$y = kx + b \qquad\qquad (1)$$

According to the lower thresholds ($x_{min}$, $y_{min}$) and the upper thresholds ($x_{max}$, $y_{max}$) of the viewing distance and the caption size, it is obtained as follows:

$$\begin{cases} k = \dfrac{y_{max} - y_{min}}{x_{max} - x_{min}} \\[2ex] b = y_{max} - \dfrac{y_{max} - y_{min}}{x_{max} - x_{min}} \cdot x_{max} \end{cases} \qquad\qquad (2)$$

In the formula (2), $y_{max} > y_{min}$ and $x_{max} > x_{min}$, that is,

$$y = \frac{y_{max} - y_{min}}{x_{max} - x_{min}} \cdot x + y_{max} - \frac{y_{max} - y_{min}}{x_{max} - x_{min}} \cdot x_{max} \qquad\qquad (3)$$

It can be known from the formula (3) that a corresponding caption size can be obtained under a given viewing distance. Since selection of the upper thresholds or the lower thresholds has a significant influence on an actual effect to be achieved by self-adaptive adjustment of the caption size, the selection of the upper thresholds or the lower thresholds should satisfy the following conditions.

The user can still watch the video normally with the upper thresholds or the lower thresholds; and a range of the thresholds should be proper to cover different video watching scenarios at home as many as possible. If the range is too large, the caption becomes too attractive due to a large size, resulting in a negative effect; if the range is too small, the actual effect to be achieved by the automatic adjustment is minimized. Further, the caption size should be changed gradually, rather than being changed sharply.

In the present disclosure, in a case where the caption resource is hard-coded into a video resource, the caption resource is converted into a text form, and the display size of the converted caption resource in the text form is adjusted according to the distance between the terminal and the remote control device; or in a case where the video resource is independent of the caption resource, the display size of the caption resource is adjusted according to the distance between the terminal and the remote control device. The caption resource with the adjusted size is loaded into video images for display.

Through the above description of the implementations, those of ordinary skill in the art can understand clearly that the method according to the above embodiments may be implemented by software together with a necessary general-purpose hardware platform, and may also be implemented by hardware, but the former is better in many cases. Based on such understanding, the technical solutions of the present disclosure may be implemented in a form of a software product, which is stored in a storage medium (such as a Read-Only Memory (ROM)/Random Access Memory (RAM), a magnetic disk and an optical disc) and includes several instructions to enable a terminal device (which may be a mobile phone, a computer, a server or a network device) to perform the method described in each of the embodiments of the present disclosure.

FIG. 2 is a schematic structural diagram of a caption adjustment device according to the present disclosure. The caption adjustment device is applied to a terminal, and includes: a ranging signal transceiving module 210, a distance determining module 220, and a caption adjusting module 230.

The ranging signal transceiving module 210 is configured to send a ranging signal to a remote control device, and receive the ranging signal returned by the remote control device.

The distance determining module 220 is configured to determine a distance between the terminal and the remote control device according to a time difference between sending of the ranging signal and reception of the ranging signal.

The caption adjusting module 230 is configured to adjust a display size of a currently played caption resource according to the distance between the terminal and the remote control device.

Through the caption adjustment device provided by the present disclosure, the distance between the terminal and the remote control device is determined by the terminal sending the ranging signal to the remote control device, and the caption size is adjusted according to the distance between the terminal and the remote control device. Thus, the problems that a camera is additionally needed or manual adjustment is needed are solved, the need to be supported by an extra device is eliminated, self-adjustment of a caption can be realized, and the user can see the caption more clearly, thereby reducing eye fatigue and improving the viewing experience of the user.

In the present disclosure, the device may further include: a caption loading module 240 configured to load the caption resource with an adjusted size into video images for display.

The caption adjustment device is a device for implementing the caption adjustment method, and specific contents of the device may correspond to those of the method, and thus are not repeated here.

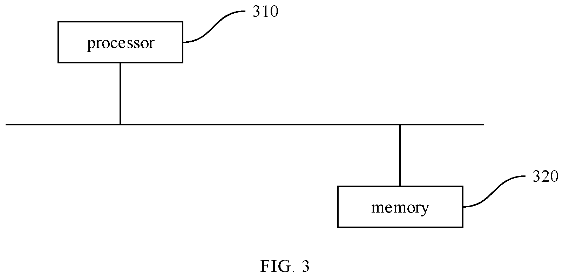

FIG. 3 is a schematic structural diagram of a terminal according to the present disclosure. As shown in FIG. 3, the terminal includes: a processor 310 and a memory 320. The number of the processor 310 in the terminal may be one or more, and FIG. 3 illustrates an example where the number of the processor 310 is one. The number of the memory 320 in the device may be one or more, and FIG. 3 illustrates an example where the number of the memory 320 is one. The processor 310 and the memory 320 of the terminal may be connected through a bus or by other means, and FIG. 3 illustrates an example where the processor 310 and the memory 320 are connected through a bus. In the present disclosure, the terminal may be a set top box, an IPTV, or one of devices capable of playing a video.

As a computer-readable storage medium, the memory 320 may be configured to store software programs, computer-executable programs and modules, such as program instructions/modules corresponding to the device described in any of the embodiments of the present disclosure (e.g., the ranging signal transceiving module in the caption adjustment device). The memory 320 may include a program storage region and a data storage region, the program storage region is capable of storing an operating system, and at least one application program needed by function; and the data storage region is capable of storing data created according to use of the device. Further, the memory 320 may include a high-speed random access memory, and may also include a non-volatile memory, such as at least one of magnetic storage device, a flash memory, or other non-volatile solid-state memories. In some examples, the memory 320 may further include a memory remotely arranged relative to the processor 310, and the remote memory may be connected to the terminal via a network. The examples of the above network include, but are not limited to, the Internet, an intranet, a local area network, a mobile communication network, and the combinations thereof.

The terminal provided above may be configured to perform the caption adjustment method according to any of the above embodiments, and has corresponding functions and effects.

The program stored in the memory 320 may be program instructions/modules corresponding to the caption adjustment method provided by the embodiments of the present disclosure, and the processor 310 executes one or more functional applications of a computer device and performs data processing by running the software programs, instructions and modules stored in the memory 320, that is, to implement the caption adjustment method described in the above embodiments.

The present disclosure further provide a storage medium including a computer-executable instruction, which is configured to perform a caption adjustment method when being executed by a computer processor, and the method includes: sending a ranging signal to a remote control device, and receiving the ranging signal returned by the remote control device; determining a distance between a terminal and the remote control device according to a time difference between sending of the ranging signal and reception of the ranging signal; and adjusting a display size of a caption resource currently played by the terminal according to the distance between the terminal and the remote control device.

In the present disclosure, before sending the ranging signal to the remote control device, the method further includes: receiving a signal sent by the remote control device, with the signal configured to instruct the terminal to send the ranging signal to the remote control device.

With the caption adjustment method provided by the present disclosure, the distance between the terminal and the remote control device is determined by the terminal sending the ranging signal to the remote control device, and the caption size is adjusted according to the distance between the terminal and the remote control device. Thus, the problems that a camera is additionally needed or manual adjustment is needed are solved, the need to be supported by an extra device is eliminated, self-adjustment of a caption can be realized, and the user can see the caption more clearly, thereby reducing eye fatigue and improving the viewing experience of the user.

It should be understood by those of ordinary skill in the art that the functional modules/units in all or some of the operations, the systems and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the components may be implemented as software executed by a processor, such as a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM, an ROM, an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

**Claims**

1. A caption adjustment method, comprising:

   sending, by a terminal, a ranging signal to a remote control device, and receiving the ranging signal returned by the remote control device;
   determining, by the terminal, a distance between the terminal and the remote control device according to a time difference between sending of the ranging signal and reception of the ranging signal; and
   adjusting, by the terminal, a display size of a caption resource currently played by the terminal according to the distance between the terminal and the remote control device.

2. The method of claim 1, before sending the ranging signal to the remote control device, further comprising:
   receiving, by the terminal, a signal sent by the remote control device, wherein the signal is configured to instruct the terminal to send the ranging signal to the remote control device.

3. The method of claim 1, wherein determining the distance between the terminal and the remote control device according to the time difference between the sending of the ranging signal and the reception of the ranging signal comprises:

    calculating time differences between the sending of the ranging signal and the reception of the ranging signal for N times, wherein N is an integer greater than zero;
    taking an average of products of the time differences and a propagation speed of the ranging signal; and
    taking a half of the average as the distance between the terminal and the remote control device.

4. The method of claim 1, wherein adjusting the display size of the caption resource currently played by the terminal according to the distance between the terminal and the remote control device comprises:

    in a case where the caption resource is hard-coded into a video resource, converting the caption resource into a text form, and adjusting the display size of the converted caption resource in the text form according to the distance between the terminal and the remote control device; or
    in a case where the video resource is independent of the caption resource, adjusting the display size of the caption resource according to the distance between the terminal and the remote control device.

5. The method of claim 4, further comprising:
loading the caption resource with the adjusted size into video images for display.

6. The method of any one of claims 1 to 4, further comprising:

    in a case where the distance between the terminal and the remote control device is less than a minimum threshold, taking a preset minimum limit value as the display size of the caption resource; and
    in a case where the distance between the terminal and the remote control device is greater than a maximum threshold, taking a preset maximum limit value as the display size of the caption resource.

7. A caption adjustment device applied to a terminal, comprising:

    a ranging signal transceiving module configured to send a ranging signal to a remote control device, and receive the ranging signal returned by the remote control device;
    a distance determining module configured to determine a distance between the terminal and the remote control device according to a time difference between sending of the ranging signal and reception of the ranging signal; and
    a caption adjusting module configured to adjust a display size of a currently played caption resource according to the distance between the terminal and the remote control device.

8. The device of claim 7, further comprising:
a caption loading module configured to load the caption resource with an adjusted size into video images for display.

9. A terminal, comprising a memory having a computer program stored therein, and a processor configured to run the computer program to perform the method of any one of claims 1 to 6.

10. A computer-readable storage medium having a computer program stored thereon which, when executed by a processor, cause the processor to perform the method of any one of claims 1 to 6.

send a ranging signal to a remote control device, and receive the ranging signal returned by the remote control device

— 110

determine a distance between a terminal and the remote control device according to a time difference between sending of the ranging signal and reception of the ranging signal

— 120

adjust a display size of a caption resource currently played by the terminal according to the distance between the terminal and the remote control device

— 130

FIG. 1

ranging signal transceiving module
210

distance determining module
220

caption adjusting module
230

FIG. 2

FIG. 3

## INTERNATIONAL SEARCH REPORT

| International application No. |
| --- |
| **PCT/CN2020/130446** |

**A.    CLASSIFICATION OF SUBJECT MATTER**

H04N 21/485(2011.01)i

According to International Patent Classification (IPC) or to both national classification and IPC

**B.    FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

VEN; CNABS; CNTXT; CNKI; WOTXT; USTXT; EPTXT; BIGN: 距离, 字幕, 文字, 大小, 时间, 遥控, distance, subtitle, caption, time , size, remote 1w control

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2018103964 A1 (ARCELIK AS) 14 June 2018 (2018-06-14) description, paragraphs 22-31 | 1-10 |
| X | US 7379078 B1 (HEWLETT PACKARD DEVELOPMENT CO) 27 May 2008 (2008-05-27) description, column 2 line 57 - column 8 line 47 | 1-10 |
| X | CN 1532802 A (PIONEER CORPORATION) 29 September 2004 (2004-09-29) description, page 3 line 11 - page 13 line 20 | 1-10 |
| A | CN 109756788 A (TENCENT TECHNOLOGY SHENZHEN CO., LTD.) 14 May 2019 (2019-05-14) entire document | 1-10 |
| A | CN 105763959 A (TCL OPTOELECTRONICS TECHNOLOGY (HUIZHOU) CO., LTD.) 13 July 2016 (2016-07-13) entire document | 1-10 |
| A | US 2014184638 A1 (RAMACHANDRAN, S. et al.) 03 July 2014 (2014-07-03) entire document | 1-10 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 January 2021** | **25 January 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/130446**

| Patent document cited in search report | | | Publication date (day/month/year) | Patent family member(s) | | | Publication date (day/month/year) |
|---|---|---|---|---|---|---|---|
| WO | 2018103964 | A1 | 14 June 2018 | TR | 201618080 | A2 | 21 June 2018 |
| US | 7379078 | B1 | 27 May 2008 | None | | | |
| CN | 1532802 | A | 29 September 2004 | JP | 2004287168 | A | 14 October 2004 |
| | | | | US | 2004230904 | A1 | 18 November 2004 |
| CN | 109756788 | A | 14 May 2019 | WO | 2019085980 | A1 | 09 May 2019 |
| CN | 105763959 | A | 13 July 2016 | CN | 105763959 | B | 04 June 2019 |
| US | 2014184638 | A1 | 03 July 2014 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911399489